# EUROPÄISCHE PATENTANMELDUNG

(11) **EP 0 859 532 A2**
(43) Veröffentlichungstag der Anmeldung: **19.08.1998**
(21) Anmeldenummer: 98101057.2
(22) Anmeldetag: 21.01.1998
(51) Int. Cl.: H04Q 7/38

(54) **Verfahren und Anordnung zum Registrieren von schnurlosen Kommunikationsendgeräten**

(30) Priorität: 14.02.1997 DE 19705771
(71) Anmelder: SIEMENS AKTIENGESELLSCHAFT, 80333 München (DE)
(72) Erfinder: Morper, Hans-Jochen, 85253 Erdweg (DE); Galensa, Klaus, Boca Raton, FL 33431 (US)

(57) **Zusammenfassung**

In leitungsgebundenen, einem Kommunikationsnetz zugordneten (KN) Zubringernetzen (AN) sind Kommunikationsendgeräte (KE) schnurlos angeschlossen. In im Kommunikationsnetz (KN) vorgesehenen Heitmat- und Besucher-Datenbasen (HDB,BDB) sind Kommunikationsendgeräte-individuelle Daten (sd) gespeichert. Zusätzlich ist in den Zubringernetzen (AN) jeweils zumindest eine Sub-Besucher-Datenbasis (SBDB) zur zumindest temporären Speicherung von Kommunikationsendgeräte-individuelle Daten (sd) der aktuell im jeweiligen Zubringernetz (AN) registrierten Kommunikationsendgeräte (KE) vorgesehen. Hierdurch wird die zwischen Zubringernetz (AN) und Kommunikationsnetz (KN) zu übermittelnde Informationsmenge reduziert und deren Steuerungen werden dynamisch entlastet.

## Beschreibung

In zukünftigen leitungsgebundenen Kommunikationsnetzen werden Kommunikationsendgeräte nicht nur leitungsgebunden sondern zusätzlich drahtlos, insbesondere schnurlos angeschlossen. Dieser schnurlose Anschluß erfolgt in Zubringernetzen des Kommunikationsnetzes. Diese Zubringernetze enthalten verkehrskonzentrierende Einrichtungen, beispielsweise eine Radio-Distribution-Einheit, an die Basisstationen angeschlossen sind. Diese Basisstationen sind für den drahtlosen bzw. schnurlosen Anschluß von Kommunikationsendgeräten vorgesehen, wobei die Luftsschnittstelle gemäß dem standardisierten DECT-Verfahren (Digital Enhanced Cordless Telecommunication) realisiert sein kann. Die DECT-Luftschnittstelle ist in den ETSI-Standards 300 175 Teil 1 bis 8 definiert.

In die Kommunikationsnetze sind zusätzlich Mobiltäts-Management-Funktionen für schnurlos angeschlossene Kommunikationsendgeräte zu integrieren. Hierzu ist im Rahmen einer internationalen Standardisierung - bei ETSI im Draft DE/NA-010039, 26.9.96, 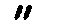 Cordless Terminal Mobility (CTM)-Phase 1; Service Description - vorgeschlagen, die Mobilitäts-Management-Funktionen durch ein intelligentes Netzwerk zu realisieren, wobei das leitungsgebundene Kommunikationsnetz mit einem 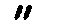 intelligenten Netzwerk ergänzt wird. In dem intelligenten Netzwerk sind alle erforderlichen Mobilitäts-Management-Funktionen in speziellen Service-Zentralen bzw. Servern realisiert, die an das leitungsgebundene Kommunikationsnetz angeschlossen sind. Die Vermittlung der von schnurlosen bzw. drahtlosen Kommunikationsendgeräten initialisierten Verbindungen an die Service-Zentralen erfolgt durch das leitungsgebundene Kommunikationsnetz.

Des weiteren sind Mobilfunk-Netz, insbesondere das standardisierte GSM (Globale System for Mobile Communication) - Mobilfunknetz-Netz, beispielsweise aus 'Mobilfunk und Intelligente Netze', Jacek Biala, S.57 bis 74, 1995, Viewig & Sohn Verlag bekannt, bei dem in speziellen Mobilvermittlungsstellen (im Standard mit MSC) bezeichnet, Besucher- und Heimatregister (HLR,VLR) vorgesehen sind. In den Heimatregistern - in einem Mobilfunk-Kommunikationsnetz jeweils für einen Service-Bereich vorgesehen - sind für die zugeordneten Mobil-Kommunikationsendgeräte die Subskriptions-Daten, Service Profiles (Leistungsmerkmalkonfiguration) und Service-Bereichsindividuelle Informationen (z.B. Location Informationen) gespeichert. Die Service-Bereichs-individuellen Informationen sind in jeweils in einem diesen Bereich zugeordneten Besucherregister gespeichert. Die Besucherregister unterstützen die lokalen Mobil-Kommunikationsendgeräte beim Verbindungsaufbau und stellen Zwischenspeicher für die temporäre Speicherung von teilnehmerindividuellen Informationen dar - üblicherweise Subskriptions-Daten bzw. Service Profiles während eines Registierungs-Prozesses bzw. Verbindungsaufbaus. Das Besucherregister fordert insbesondere bei einer Registrierungsanforderung (Location Registration) durch ein besuchendes Mobil-Kommunikationsendgerät - d.h. ist in diesem Service-Bereich nicht bekannt - die vorhergehend beschriebenen Informationen vom Heimatregister an. Die Besucherregister sind insbesondere in speziellen Mobilvermittlungsstellen und die Heimatregister in speziellen Service-Zentren angeordnet. Das leitungsgebundene Kommunikationsnetz dient als Zubringernetz für die Mobilvermittlungsstellen bzw. Service-Zentren.

Zwischen einem Zubringernetz und einem Kommunikationsnetz, beispielsweise dem GSM-Mobil-Funknetz, kommt es bei häufigen Aktivierungen der schnurlos angeschlossenen Kommunikationsendgeräte bzw. einem häufigen 'Roaming' von Kommunikationsendgeräten, d.h. Wechsel der Funkzellen bzw. Service-Bereiche, zu einer häufigen Übermittlung von MobilitätsManagement-Informationen, insbesondere Subskriptions-Daten - bezüglich der Art und der Formate der Mobilitäts-Management-Informationen wird auf den ETSI Draft des DSS1+ Protokolls hingewiesen. Dies führt zu einem erhöhten Ver-kehrsaufkommen an der Schnittstelle zwischen Zubringernetzen und Kommunikationssystemen des Kommunikationsnetzes, die die Komponenten der Zubringernetze und Kommunikationsnetze erheblich belasten.

Die der Erfindung zugrundeliegende Aufgabe besteht darin, daß das hohe Verkehrsaufkommen zwischen den Zubringernetzen und den Kommunikationssystemen des jeweiligen Kommunikationsnetzes unter Berücksichtigung einer Realisierung der Mobilitäts-Funktion in leitungsgebundenen Kommunikationsnetzen zu reduzieren. Die Aufgabe wird durch die Merkmale der Patentansprüche 1 und 6 gelöst.

Der wesentliche Aspekt der Erfindung ist darin zu sehen, daß im leitungsgebundenen Kommunikationsnetz Heitmat- und Besucher-Datenbasen zur Speicherung von Supskriptions-Daten vorgesehen sind. In den Zubringernetzen ist jeweils zusätzlich zumindest eine Sub-Besucher-Datenbasis vorgesehen, in der Teile der Subskriptionsdaten sowie Zugangsdaten (Session Keys) der aktuell im jeweiligen Zubringernetz registrierten, schnurlos bzw. drahtlos angeschlossenen Kommunikationsendgeräte zumindest temporär gespeichert sind. Durch die Anordnung von Besucher- und Heim-Datenbasen in leitungsgebundenen Kommunikationsnetzen ist die Mobilitäts-Funktion für schnurlos im Zubringernetz angeschlossene Kommunikationsendgeräte mit geringstem Aufwand realisierbar, insbesondere bei einer Ausgestaltung der Besucher- und Heimat-Datenbasis gemäß dem GSM-Standard. Hierbei können die programmtechnisch realisierten Besucher- und Heim-Datenbasen mit geringsten Modifikationen übernommen werden. Für die Konvertierung der MobilitätsManagement-Informationen sind den Besucher-Datenbasen Interworking-Einheiten bzw. Service-Mapping-Routinen zugeordnet. Durch die Einfügung zusätzlicher Sub-Besucher-Datenbasen in den Zubringernetzen wird zusätzlich das Verkehrsaufkommen zwischen dem Zubringernetz und dem leitungsgebundenen Kommunikationsnetz verringert. Mit Hilfe der Erfindung können Mobilitäts-Management-Funktionen mit geringstem zusätzlichem programm- und schaltungstechnischen Aufwand bei geringstem zusätzlichen Verkehrsaufkommen zwischen Zubringernetz und leitungsgebundenen Kommunikationsnetz integriert werden.

Gemäß einer vorteilhaften Ausgestaltung des erfindungsgemäßen Verfahrens werden die betroffenen Subskription-Daten in einer Radio Distribution-Einheit des Zubringernetzes angeordneten Sub-Besucher-Datenbasis gespeichert - Anspruch 2. Dies stellt bei einer Zuordnung einer Sub-Besucher-Datenbasis zu einem Zubringernetz eine besonders günstige Positionierung dar, da eine Radio-Distribution-Einheit von allen schnurlos angeschlossenen Kommunikationsendgeräten erreichbar ist. Bei mehreren Sub-Besucher-Datenbasen in einem Zubringernetz können die Sub-Besucher-Datenbasen beispielsweise bereits in den Basisstationen angeordnet werden.

Bei einer weiteren Ausgestaltung der Erfindung wird bei einer 'Location Registration' eines im Zubringernetz aktivierten oder 'roamenden' Kommunikationsendgerätes die angeordente Sub-Besucher-Datenbasis auf Vorliegen der relevanten Subskriptions-Daten überprüft. Bei einem Nicht-Vorliegen wird eine Subskriptions-Daten-Anforderung an die Besucher- bzw. Heimat-Datenbasen des Kommunikationsnetzes übermittelt und daraufhin werden vom Kommunikationsnetz empfangene Subskriptions-Daten in der Sub-Besucher-Datenbasis zumindest temporar gespeichert - Anspruch 3. Diese Prozedur kann in Anlehnung der für die im Kommunikationsnetz vorgesehenen Prozeduren zum Abrufen der Subskriptions-Daten von der Heimat-Datenbasis in die Besucher-Datenbasis realisiert werden, wobei hierbei mehrere Zubringernetze einer Besucher-Datenbasis zugeordnet sind - Anspruch 4.

Weitere vorteilhafte Ausgestaltungen der Erfindung, insbesondere eine Anordnung zur Durchführung des erfindungsgemäßen Verfahrens sind den weiteren Ansprüchen zu entnehmen.

Im folgenden wird das erfindungsgemäße Verfahren bzw. die erfindungsgemäße Anordnung anhand eines Blockschaltbildes und eines Ablaufdiagrammes näher erläuternt. Dabei zeigen
- FIG 1: in einem Blockschaltbild ein leitungsgebundenes Kommunikationsnetz mit schnurlos angeschlossenen Kommunikationsendgeräten und
- FIG 2: anhand eines Ablaufdiagrammes eine 'Location Registration'-Prozedur bei einem Kommunikationsnetz nach FIG 1.

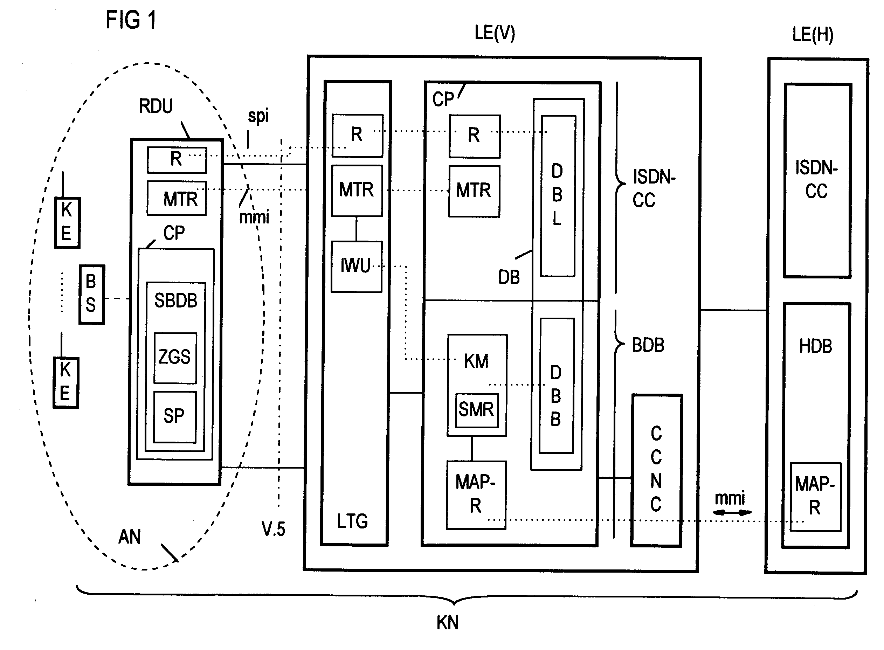

FIG 1 zeigt in einem Blockschaltbild zwei leitungsgebundene Kommunikationssysteme LE (H,V) eines leitungsgebundenen Kommunikationsnetzes KN, wobei beim Ausführungsbeispiel in einem beispielhaft dargestellten Zubringernetz AN Kommunikationsendgeräte KE drahtlos bzw. schnurlos angeschlossen sind. Das Zubringernetz AN ist über PCM-orientierte Schnittstellen, beispielsweise die standardisierte Schnittstelle V.5, mit den Kommunikationssystemen LE verbunden - beim Kommunikationssystem LE(H) nicht dargestellt. Hierbei unterstützt die standardisierte V.5.1-Schnittstelle den Anschluß von Kommunikationsendgeräten im Fernsprechdienst und die V.5.2-Schnittstelle zusätzlich den Anschluß von Kommunikationsendgeräten im ISDN-Dienst.

Die V.5-Schnittstelle V.5 ist im Zubringernetz AN in einer Radio-Distribution-Einheit RDU realisiert, die über weitere, nicht dargestellte Übertragungs- und Konzentrationseinrichtungen mit Basisstationen BS verbunden sind, an die schnurlos die Kommunikationsendgeräte KE angeschlossen sind. Die Luftschnittstelle ist gemäß dem DECT-Standard 300 175 Teil 1 bis 8 ausgebildet. In der Radio-Distribution-Einheit RDU ist eine Sub-Besucher-Datenbasis (SBDB) in einer programmgesteuerten Steuerung (CP) realisiert. Die Sub-Besucher-Datenbasis (SBDB) ist durch einen Speicher (SP) und eine zum Speicherzugriff vorgesehene Zugriffsteuerung (ZGS) gebildet.

Des weiteren ist für das Ausführungsbeispiel angenommen, daß in einem der beiden Kommunikationssysteme LE(V) eine Besucher-Datenbasis (BDB) und in einem der Kommunikationssysteme LE(H) eine Heimat-Datenbasis (HDB) vorgesehen ist, wobei das Kommunikationssystem LE(H) mit der Heimat-Datenbasis (HDB) ebenfalls eine Besucher-Datenbasis (BDB) mit einem oder mehreren zugeordneten Zubringernetzen AN mit schnurlosen Kommunikationsendgeräten KE aufweisen kann - jedoch nicht dargestellt.

In dem die Besucher-Datenbasis BDB aufweisenden Kommunikationssystem LE(V) ist die für den Anschluß des Zubringernetzes AN vorgesehene Schnittstelle, insbesondere die standardisierte V.5-Schnittstelle, in den Leitungsanschlußbaugruppen LTG - im Blockschaltbild durch ein mit LTG bezeichnetes Rechteck angedeutet - realsiert. Diese Leitungsbaugruppen LTG sind mit einer zentralen Vermittlungssteuerung CP verbunden, wobei die Heimat- bzw. Besucher-Datenbasis HDB,BDB jeweils in Speichern der Vermittlungssteuerung CP zusammen mit der Datenbasis DBL für das leitungsgebundene Kommunikationsnetz KN, insbesondere ein ISDN-Kommunikationsnetz, angeordnet ist. Für den Informationsaustausch zwischen den Kommunikationssystemen LE(H,V) des Kommunikationsnetzes KN sind Anschlußbaugruppen CCNC vorgesehen, durch die ein Zeichengabesystem, beim Ausführungsbeispiel das standardisierte Common Channel Signalling System No.7, realisiert ist. Dieses Zeichengabesystem ist für die Signalisierung zwischen leitungsgebundenen Fernsprech- und ISDN-Kommunikationsnetzen vorgesehen.

Für die Realisierung der Mobilitäts-Funktion der in den Zubringernetzen AN drahtlos bzw. schnurlos angeschlossenen Kommunikationsendgeräte KN sind zusätzliche Mobilitäts-Management-Informationen mmi vorgesehen, die sowohl zwischen den Kommunikationssystemen LE als auch zwischen diesen und den Zubringernetzen AN zu übermitteln und zu bilden bzw. zu bewerten sind. Bezüglich der Art und Form der MobilitätsManagment-Informationen mmi wird auf den ETSI-Draft DSS1+ hingewiesen. Zwischen den Kommunikationssystemen LE(H,V) ist ein für Mobilfunk-Netze vorgesehenes Signalisierungsprotokoll Mobil-Application-Protocoll (MAP) implementiert, das zusätzlich, auf dem standardisierten ISDN-User-Part-Protokoll (ISUP) basierend, durch eine Mobilitäts-Routine MAP-R realisiert ist. Zwischen dem Zubringernetz AN und dem Kommunikationssystem LE(V) werden ebenfalls Mobilitäts-Management-Informationen mmi ausgetauscht, deren Übermittlung bzw. Übermittlungssteuerung im Zubringernetz AN und in den Kommunikationssystemen LE jeweils durch eine Mobilitäts-Management-Routine MTR übernommen wird.

Da die für das Mobil-Funknetz vorgesehene Zeichengabe 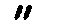 Mobility Application Protocoll" (MAP) sowie die Heimat- und Besucher-Datenbasis HDB,BDB unverändert in die leitungsgebundenen Kommunikationssysteme LE zu integrieren sind, ist für die Anpassung der Mobilitäts-Management-Informationen mmi im Zubringernetz AN an die Struktur der Mobilitäts-Management-Informationen mmi für Mobilfunk-Netzwerke eine Interworking-Einheit IWU vorgesehen. Mit Hilfe der Interworking-Einheit IWU sind beispielsweise die für den schnurlosen Anschluß von Kommunikationsendgeräten KE vorgesehenen MobilitätsManagement-Informationen mmi wie beispielsweise RS, KS und KS' hinsichtlich ihrer Formate bzw. Struktur an die Struktur der Besucher-Datenbasis BDB anzupassen bzw. zu konvertieren. Die RS, KS und KS- Inforamtionen - gemäß dem DECT-stard 300 175 Teil 7 bedeutet KS : Protable Radio Termination authentication key und KS' : Fixed radio termination authentication session key - stellen Zugangsinfomationen (Session Keys) dar, mit deren Hilfe ein gesicherter Zugriff von den jeweiligen Kommunikationsendgeräten KE zu dem Zubringernetz AN durchgeführt werden kann.

Die in den Leitungsanschlußeinheiten LTG programmtechnisch realisierte Interworking-Einheit IWU kommuniziert mit einer in der Vermittlungssteuerung CP programmtechnisch realisierten Kommunikationsmodul KM, über das die MobilitätsManagement-Informationen mmi übermittelt und in die bzw. aus der Besucher-Datenbasis BDB eingetragen bzw. gelesen werden. Die im Rahmen der Registierung übermittelten Servicedaten, d.h. das Service-Profile werden mit Hilfe einer Service-Mapping-Routine SMR konvertiert, d.h. auf die bekannte GSM-gemäße Datenstruktur abgebildet. Die Service-Mapping-Routine MPR ist in der Kommunikationsroutine KM programmtechnisch realisiert. Für diese Service-Profiles ist in der Besucher-Datenbasis BDB ein spezieller Service-Bereich - nicht dargestellt - vorgesehen.

Die Besucher-Datenbasis BDB ist Teil einer Datenbasis DB der Kommunikationssysteme LE, die zusätzlich die üblicherweise vorhandene Datenbasis DBL für die leitungsgebundenen Kommunikationsendgeräte enthält. Die leitungsgebundenen Kommunikationsendgeräte sind beispielsweise öffentlichen Kommunikationsnetzen KN wie beispielsweise dem Fersprechnetz PSTN oder dem dienstintegrierenden Kommunikationsnetz ISDN zugeordnet. Die Datenbasis DBL ist gemäß den ISDN-Standards bzw. PSTN-Standards strukturiert sowie die Service Profiles entsprechend eingetragen. Für die Übermittlung der Service-Profile-Informationen spi für leitungsgebundene Kommunikationsendgeräte über die V.5-Schnittstelle V.5 bzw. innerhalb der Kommunikationssysteme LE(H,V) sind die üblicherweise vorhandenen Routinen R vorgesehen, die im weiteren nicht erläutert sind, da sie zur Erläuterung der Erfindung nicht erforderlich sind.

In der im Zubringernetz AN angeordnete Sub-Besucher-Datenbasis SBDB werden die Mobilitäts-Management-Informationen mmi, insbesondere die vorhergehend erläuterten Informationen, zumindest temporär gespeichert. Die Abfrage und die Speicherung der bei einer 'Location Registration' zu ermittelnden Subskriptions-Daten sd werden im folgenden erläutert.

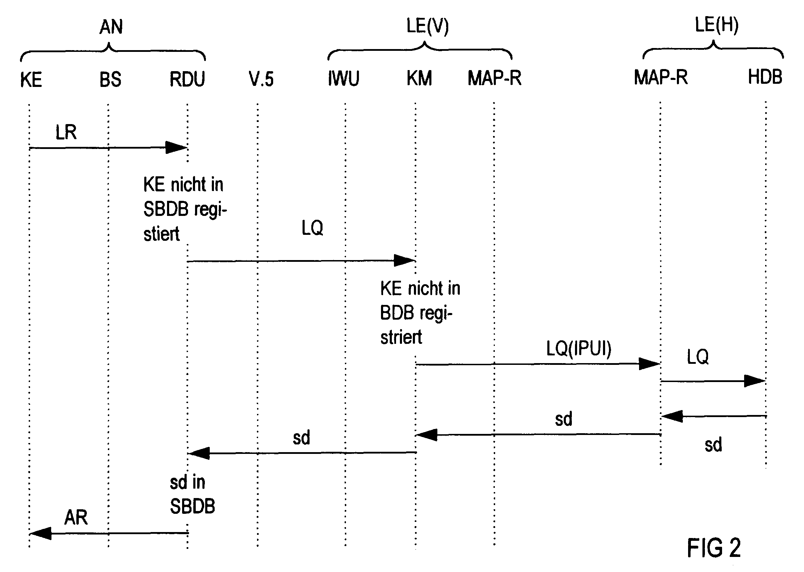

FIG 2 zeigt in einem annähernd sich selbst erläuternden Ablaufdiagramm eine 'Location-Regstration'-Prozedur, die von einem schnurlos angeschlossenen Kommunikationsendgerät KE in einem der Zubringernetze AN eingeleitet ist - beispielhaft ist eines der Zubringernetze AN dargestellt -, in dessen Sub-Besucher-Datenbasis SBDB es nicht subskripiert ist, d.h. keine Subskriptionsdaten vorliegen. Hierbei ist das Kommunikationsendgerät KE, die betroffene Basisstation BS, die Radio-Distribution-Einheit RDU, die Interworking-Einheit IWU, das Kommunikatinsmodul KM, die Mobilitäts-Routinen MAP-R und die Heimat-Datenbasis HDB jeweils als senkrechte, gestrichelte Linie dargestellt.

Nach Empfang einer 'Location Registration'-Information LR vom schnurlos angeschlossenen Kommunikationsendgerät KE wird diese an die Sub-Besucher-Datenbasis SBDB weitergeleitet, in der mit Hilfe der Zugriffsteuerung ZGS ein Speicherzugriff auf den Speicher SP durchgeführt wird. Hierdurch wird überprüft, ob für die Ausführung einer 'Location Registration' Subskriptions-Daten sd gespeichert sind. Sind Subskriptions-Daten gespeichert, kann umgehend als Antwort eine Authentisierungs-Reguest-Meldung AR an das die Location Registration initialisierende Kommunikationsendgerät KE übermittelt werden - nicht darstellt. Hierdurch kann ein Informationsaustausch über die V.5-Schnittstelle V.5 vermieden und dadurch das Verkehrsaufkommen verringert werden. Dies bedeutet auch eine dynamische Entlastung der Steuerungen CP sowohl im Zubringernetz AN als auch im Kommunikationssystem LE(V).

Um jedoch den Ablauf einer 'Location Registration' im Kommunikationsnetz KN bis zum Kommunikationssystem LE(H) zu zeigen, sei angenommen, daß in der Sub-Besucher-Datenbasis SBDB keine Subskriptions-Daten sd gespeichert sind. Folglich wird eine Location-Request-Meldung LQ gebildet und an die Interworking-Einheit IWU in den Leitungsbaugruppen LTG des Kommunikationssystems LE(V) übermittelt, in dieser an die Kommunikationssystem-interne Datenstruktur angepaßt und als angepaßte Location-Request-Meldung LR' an das Kommunikationsmodul KM übermittelt. Mit Hilfe des Kommunikationsmoduls KM und der Vermittlungssteuerung CP wird überprüft, ob das die 'Location Registration' initialisierende Kommunikationsendgerät KE in der Besucher-Datenbasis BDB registriert ist. Da auch hier das Kommunikationsendgerät KE nicht registriert ist, wird die Location Request-Meldung LQ zu einem Kommunikationssystem LE(H) mit einer Heimat-Datenbasis (HDB) weitergeleitet Die mit einer IPUI-Meldung addressierte Location Request-Meldung LQ wird mit Hilfe der Mobilitäts-Routine MAP-R gebildet und an das Kommunikationssystem LE(H) übermittelt, in welcher es durch die gleichartig realisierte Mobiltäts-Routine MAP-R empfangen und an die Heimat-Datenbasis HDB weitergeleitet wird. Aus dieser werden die Subskriptionsdaten sd (RS,KS,KS') gelesen und mit Hilfe der Mobiltitäts-Routine MAP-R an die Mobilitäts-Routine MAP-R des Kommunikationssystems LE(H) mit der Besucher-Datenbasis (BDB) übermittelt. Die an das Kommunikationsmodul KM übermittelten Subskriptionsdaten sd werden über die Interworking-Einheit IWU an die Radio-Distribution-Einheit RDU weitergeleitet und mit dessen Hilfe in die Sub-Besucher-Datenbasis SBDB eingetragen. Anschließend wird mit Hilfe der Vermittlungssteuerung CP gemäß der Location-Registration-Prozedur eine Authentisierungs-Request-Meldung AR gebildet und über das Zubringernetz AN bzw. die relevante Basisstation BS an das betroffene Kommunikationsendgerät KE übermittelt. Die Authentisierungsprozedur - in FIG 2 nicht dargestellt - wird mit den mit der Authentisierungs-Request-Meldung AR enthaltenen bzw. mitübermittelten, aktualisierten und in der Besucher-Datenbasis BDB gespeicherten Subskriptionsdaten sd durchgeführt.

Für die Ermittlung der zuständigen Heimat- bzw. Besucher-Datenbasis HDB,BDB sind in der Sub-Besucher-Datenbasis BSDB und in der Besucher-Datenbasis BDB jeweils Hiweise - beispielsweise eine Netzadresse - angegeben, mit deren Hilfe die jeweils die in der Hierarchie folgende Datenbasis BDB,HDB ermittelt bzw. erreicht werden kann.

## Patentansprüche

1. Verfahren zum Registrieren von in leitungsgebundenen Zubringernetzen (AN) schnurlos angeschlossenen Kommunikationsendgeräten (KE), wobei die Zubringernetze (AN) einem Kommunikationsnetz (KN) zugordnet sind,
- bei dem in im Kommunikationsnetz (KN) vorgesehenen Heitmat- und Besucher-Datenbasen (HDB,VDB) Kommunikationsendgeräteindividuelle Daten (sd) gespeichert werden,
- bei dem in den Zubringernetzen (AN) jeweils zumindest eine Sub-Besucher-Datenbasis (SBDB) vorgesehen ist, in der Kommunikationsendgeräte-individuelle Daten (sd) der aktuell im jeweiligen Zubringernetz (AN) registrierten, schnurlos angeschlossenen Kommunikationsendgeräte (KE) zumindest temporär gespeichert sind.

2. Verfahren nach Anspruch 1, **dadurch gekennzeichnet,**
daß die Kommunikationsendgeräte-individuellen Daten (sd) in in einer Radio-Distribution-Einheit (RDU) des Zubringernetzes (AN) angeordneten Sub-Besucher-Datenbasis (SBDB) zumindest gespeichert wird.

3. Verfahren nach einem der Ansprüche 1 oder 2, **dadurch gekennzeichnet,**
daß bei einer Location Registration eines im Zubringernetz (AN) aktivierten oder roamenden Kommunikationsendgerätes (KE)
- die angeordente Sub-Besucher-Datenbasis (SBDB) auf Vorliegen der relevanten Kommunikationsendgeräte-individuellen Daten (sd) überprüft wird, und
- bei Nicht-Vorliegen eine Subskriptions-Daten-Anforderung (LQ) an die Besucher- bzw. Heimdatenbasis (BDB,HDB) des Kommunikationsnetzes (KN) übermittelt und daraufhin vom Kommunikationsnetz (KN) empfangene Kommunikationsendgeräteindividuellen Daten (sd) in der Sub-Besucher-Datenbasis (SBDB) zumindest temporär gespeichert werden, wobei die Kommunikationsendgeräte-individuellen Daten (sd) zumindest teilweise durch Subskriptions-Daten (sd) repräsentiert sind.

4. Verfahren nach einem der Ansprüche 1 bis 3, **dadurch gekennzeichnet,**
daß mehrere Zubringernetze (AN) einer Besucher-Datenbasis (BDB) im leitungsgebundenen Kommunikationsnetz (KN) zugeordnet sind.

5. Verfahren nach einem der Ansprüche 1 bis 4, **dadurch gekennzeichnet,**
daß die Sub-Besucher-Datenbasis (SBDB) hinsichtlich der Datenstruktur und Dateninhalte gemäß den in dem Kommunikationsnetz (KN) vorgesehenen Besucher- und Heim-Datenbasis (BDB,HDB) ausgestaltet ist.

6. Anordnung zum Registrieren von Kommunikationsendgeräten (KE), die in einem leitungsgebundenen Zubringernetz (AN) schnurlos angeschlossen sind,
- mit einem mit den Zubringernetzen (AN) verbundenen Kommunikationsnetz (KN), in denen für die Speicherung von Kommunikationsendgeräte-individuelle Daten (sd) von schnurlos angeschlossenen Kommunikationsendgeräten (KE) Besucher- und Heimat-Datenbasen (BDB,HDB) angeordnet sind,
- mit zumindest einer Sub-Besucher-Datenbasis (SBDB) in den Zubringernetzen (AN) zur Registrierung von in dem jeweiligen Zubringernetz (AN) aktivierten oder roamenden, schnurlos angeschlossenen Kommunikationsendgeräten (KE).

7. Anordnung nach Anspruch 6, **dadurch gekennzeichnet,**
daß die Sub-Besucher-Datenbasis (SBDB) in einer programmgesteuerten Steuerung (CP) einer Radio-Distribution-Einheit (RDU) des Zubringernetzes (AN) realisiert ist.

8. Anordnung nach Anspruch 6 oder 7, **dadurch gekennzeichnet,** daß die Sub-Besucher-Datenbasis (SBDB) durch einen Speicher (SP) und eine zum Speicherzugriff vorgesehene Zugriffsteuerung (ZGS) gebildet ist.
